# EUROPÄISCHE PATENTSCHRIFT

(11) **EP 3 019 568 B1**
(45) Veröffentlichungstag und Bekanntmachung des Hinweises auf die Patenterteilung: **31.01.2018**
(21) Anmeldenummer: 14730879.5
(22) Anmeldetag: 16.06.2014
(51) Int. Cl.: C09D 183/10, C08G 77/26, C08G 77/388, C09J 183/10, C08L 101/10

(54) **HÄRTBARE SILYLGRUPPEN ENTHALTENDE ZUSAMMENSETZUNGEN MIT VERBESSERTER LAGERSTABILITÄT**
CURABLE COMPOSITIONS CONTAINING SILYL GROUPS AND HAVING IMPROVED STORAGE STABILITY
COMPOSITIONS DURCISSABLES CONTENANT DES GROUPES SILYLE À STABILITÉ AU STOCKAGE AMÉLIORÉE

(30) Priorität: 12.07.2013 DE 102013213655
(43) Veröffentlichungstag der Anmeldung: 18.05.2016
(73) Patentinhaber: Evonik Degussa GmbH, 45128 Essen (DE)
(72) Erfinder: SCHUBERT, Frank, 47506 Neukirchen-Vluyn (DE); KNOTT, Wilfried, 45355 Essen (DE)
(86) Internationale Anmeldenummer: PCT/EP2014/062498
(87) Internationale Veröffentlichungsnummer: WO 2015/003875

(56) Entgegenhaltungen:
- EP-A1- 1 746 133
- EP-A1- 2 093 244
- JP-A- 2004 107 396

## Beschreibung

Die Erfindung betrifft feuchtigkeitshärtende Zusammensetzungen mit erhöhter Lagerstabilität auf Basis Silylgruppen tragender Verbindungen und deren Verwendung.

Präpolymersysteme, die über reaktive Alkoxysilylgruppen verfügen, sind seit langem bekannt und werden vielfach zur Herstellung von elastischen Dicht- und Klebstoffen im Industrie- und Baubereich verwendet. In Gegenwart von Luftfeuchtigkeit und geeigneten Katalysatoren sind diese alkoxysilyl-modifizierten Präpolymere bereits bei Raumtemperatur in der Lage, unter Abspaltung der Alkoxygruppen und Ausbildung einer Si-O-Si-Bindung miteinander zu kondensieren. Somit lassen sich diese Präpolymere u.a. als einkomponentige Systeme verwenden, welche den Vorteil einer einfachen Handhabung besitzen, da keine zweite Komponente zudosiert und eingemischt werden muss.
Der Stand der Technik kennt zahlreiche unterschiedlich aufgebaute Polymergrundgerüste, an denen die Alkoxysilylgruppen chemisch angebunden sind.
So sind terminal alkoxysilylfunktionelle Polyurethane z.B. aus dem Übersichtsartikel in "Adhesives Age" 4/1995, Seite 30 ff. (Autoren: Ta-Min Feng, B. A. Waldmann) dargestellt. Besonders verbreitet sind alkoxysilylterminierte Präpolymere, die ein organisches Rückgrat aufweisen und beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut sind, beschrieben u.a. in EP 0 372 561, WO 00/37533 oder US 6,207,766. Daneben sind aber auch Systeme weit verbreitet, deren Rückgrat ganz oder zumindest zum Teil aus Organosiloxanen besteht, beschrieben u.a. in WO 96/34030. Des Weiteren sind auch alkoxysilylfunktionelle Präpolymere mit einem Poly-(meth)acrylatrückgrat bekannt.

Die Lehre der WO 2008/058955 sieht vor, weitere freie Silylverbindungen als zusätzliche Komponenten hinzuzufügen, die mehrere Funktionen übernehmen können. Diese können als Wasserfänger (Verbesserung der Lagerstabilität), als Vernetzer und/oder Reaktivverdünner (Steigerung der Netzwerkdichte und damit Verbesserung der mechanischen Eigenschaften) und nicht zuletzt als Haftvermittler fungieren. Wie in der WO 2008/058955 ausgeführt, können niedermolekulare Alkoxysilylverbindungen, die eine basische NH₂-, NHR³-, oder N(R³)₂-Gruppe besitzen, nicht nur die Rolle eines Haftvermittlers sondern sogar die eines Härtungskatalysators oder zumindest eines Härtungscokatalysators übernehmen.

Alkoxysilylgruppen tragende Polymere werden in der Regel als Bindemittelkomponente in härtbaren Mischungen eingesetzt. In sogenannten 1K-Systemen liegen diese Polymere in einem Gemisch mit zumeist anorganischen Füllstoffen, Weichmachern, Rheologiehilfsmitteln, Reaktivverdünnern, Härtungskatalysatoren, Wasserfängern, Haftvermittlern, Farbpigmenten, UV-Stabilisatoren und z.B. Antioxidantien vor. Unter Ausschluss von Wasser, beispielsweise wenn in Kartuschen vor Luftfeuchtigkeit geschützt, müssen diese härtbaren Mischungen über einen Zeitraum mehrerer Monate lagerstabil sein. Erst bei der Applikation, etwa beim Auspressen der härtbaren Masse aus der Kartusche, setzt in Gegenwart von Luftfeuchtigkeit die gewollte Härtungsreaktion ein.
Der große Vorteil von 1K-Systemen im Gegensatz zu 2K-Systemen liegt für den Anwender in der Einfachheit der Applikation.

Feuchtigkeitshärtende 1K-Mischungen stellen jedoch hohe Anforderungen an die Auswahl der Mischungskomponenten und den Formulierprozess unter striktem Feuchtigkeitsausschluss. Kritisch sind Feuchtigkeitsspuren in den Einsatzstoffen, so dass es gängige Praxis ist, den härtbaren Mischungen prophylaktisch Wasserfänger wie Vinyltrialkoxysilane zuzusetzen. Diese gegenüber Wasser besonders reaktiven Silylverbindungen verhindern eine unbeabsichtigte Vernetzung der Alkoxysilylgruppen tragenden Polymere und sorgen für eine verbesserte Lagerstabilität.

Ebenfalls kritisch sind Wechselwirkungen und chemische Reaktionen der Komponenten einer härtbaren Mischung untereinander. Dies gilt insbesondere für das Zusammenwirken von Alkoxysilylgruppen tragenden Präpolymeren und basischen aminofunktionellen Alkoxysilan-Haftvermittlern, und zwar insbesondere, wenn gleichzeitig auch noch Härtungskatalysatoren wie etwa die weit verbreiteten Zinn-Katalysatoren zugegen sind.

Wie z.B. in der US 2010/0029860 A1 ausgeführt, stellen aliphatische und cycloaliphatische Amine Härtungskatalysatoren für Alkoxysilylverbindungen dar. Für viele Anwendungen stellen Aminosilan-Haftvermittler unverzichtbare Inhaltsstoffe dar, um die Substratanbindung der ausgehärteten Kleb- und Dichtmassen zu gewährleisten. Nach Stand der Technik wird der negative Einfluss dieser Verbindungen auf die Lagerstabilität von einkomponentigen, feuchtigkeitshärtbaren und Alkoxysilylgruppen enthaltenden Mischungen meist in Kauf genommen.
Die Neigung zu einer ungewünschten Anvernetzung während der Lagerung erhöht sich durch solche Bestandteile einer härtbaren Mischung, die funktionelle Gruppen aufweisen, welche zu Reaktionen oder Wechselwirkungen mit den Alkoxysilylgruppen befähigt sind. Hierzu gehören neben Carbonsäuren und anderen aziden Verbindungen Hydroxylverbindungen, wie etwa Alkohole, Phenole, SiOH-Funktionen aufweisende Silanole und im Speziellen Polyetherole.

Alkoxysilylgruppen tragende Polyether gemäß EP 2093244, die selbst terminale OH-Gruppen aufweisen, zeigen eine besonders hohe Neigung zur Vernetzung selbst unter sehr trockenen Bedingungen. Wie in EP 2415796 ausgeführt, ist die Lagerstabilität in Gegenwart von Metallkatalysatoren und Aminen unzureichend, so dass in dem dort offenbarten Verfahren versucht wird, durch Einführung raumerfüllender Endgruppen die Reaktivität der OH-Funktion zu vermindern.

Die EP 2415797 beschreibt ein Verfahren, bei dem die endständige OH-Gruppe des Polymeren durch Umsetzung mit z.B. Isocyanaten, Hexamethyldisilazan oder Anhydriden verkappt wird, um die Lagerstabilität härtbarer Mischungen zu verbessern.
Bei nicht ausreichender Lagerstabilität kommt es auch im geschlossenen Gebinde zu einer Hydrolyse und/oder Umesterung der Alkoxysilylfunktionen und möglicherweise zu Kondensationsreaktionen der Si-haltigen Gruppen untereinander. Auf Grund des Molmassenaufbaus wird die härtbare Mischung im Laufe der Zeit immer viskoser und schließlich fest, so dass eine bestimmungsgemäße Anwendung nicht mehr möglich ist. Es besteht nach wie vor Bedarf an neuen Möglichkeiten, die Lagerstabilität härtbarer Mischungen zu verbessern.
Aus dem Stand der Technik sind Imingruppen tragende Aminosilane bekannt; ebenso verschiedene Möglichkeiten zu deren Herstellung und Anwendungen. So beschreibt die deutsche Patentschrift DBP 1104508 neben der Herstellung von Iminen die Anwendung als UV-Absorptionsmittel in Sonnencremes, als chelatbildende Mittel und in Siliconelastomeren als Vulkanisations-/Härtungsmittel. Die WO 2007/034987 nennt die Verwendung hochreiner Imin-modifizierter Silane als Haftvermittler und Härter in einkomponentigen härtbaren Harzsystemen wie Epoxy-, Urethan- und Phenolharzsystemen. Die EP 1544204 offenbart besonders geruchsarme Imingruppen tragende Silane, die aus ausgewählten Aldehyden ohne H-Atom am □-Kohlenstoff hergestellt werden. Auf Grund ihrer verkappten primären Amingruppe können diese Verbindungen in Isocyanate enthaltenden härtbaren 1K-PU-Systemen eingesetzt werden. Ebenfalls PU-Anwendungen beschreibt die DE 3414877. Der Einsatz von Imin-funktionellen Silanen, hergestellt aus aromatischen Carbonylverbindungen, zur Oberflächenbehandlung von Glasfasern wird in EP 0768313 dargestellt. Bis zum heutigen Tage sind daher keine feuchtigkeitshärtenden Zusammensetzungen enthaltend Silylgruppen tragende Verbindungen bekannt, in deren Zusammensetzung Imine eingesetzt werden können, ohne die Lagerstabilität der Zusammensetzung zu gefährden oder aber andererseits deren Aushärtungseigenschaften negativ zu beeinflussen, beispielsweise durch zu langsames Aushärten oder völliges Ausbleiben des Aushärtens. Wie bereits erwähnt, besteht jedoch nach wie vor Bedarf an neuen Möglichkeiten, die Lagerstabilität härtbarer Mischungen zu verbessern.

Aufgabe der vorliegenden Erfindung ist es daher, den nach Stand der Technik vorherrschenden Mangel an Lagerstabilität von feuchtigkeitshärtenden Zusammensetzungen, insbesondere enthaltend Silylgruppen tragende Verbindungen, zu beheben.

Aufgabe der vorliegenden Erfindung ist außerdem die Bereitstellung neuer härtbarer Alkoxysilylgruppen enthaltender Zusammensetzungen mit verbesserter Lagerstabilität und eine Methode zu deren Herstellung, die es auf einfache Weise gestattet, auf das OH-Endcapping Hydroxylgruppen enthaltender Alkoxysilyl-Präpolymere, also auf eine zusätzliche Reaktion zur Erniedrigung der Reaktivität freier OH-Gruppen (also auf Schutzgruppen) zu verzichten. Damit kann ein zusätzlicher Reaktionsschritt bei der Herstellung der Präpolymere eingespart werden und so zeitliche, räumliche und finanzielle Ressourcen eingespart werden.

Überraschend wurde gefunden, dass Imine der Formel (1) in feuchtigkeitshärtenden Zusammensetzungen, welche Alkoxysilylgruppen tragende Präpolymere enthalten, stabile Haftvermittler darstellen, welche die Lagerstabilität der härtbaren Mischungen im Vergleich zu konventionellen Aminosilan-Haftvermittlern, insbesondere gegenüber den Aminosilan-Haftvermittlern der Formel (3), signifikant erhöhen und gleichzeitig die gezielte Aushärtung der Zusammensetzung auf Wunsch ermöglichen.
Gegenstand der Erfindung sind somit feuchtigkeitshärtende Zusammensetzungen mit erhöhter Lagerstabilität, welche neben Silylgruppen tragenden Präpolymeren Imingruppen aufweisende Silan-Haftvermittler enthalten.
Diese Aufgabe konnte durch härtbare Zusammensetzungen enthaltend
a. Mindestens eine Imingruppen aufweisende Silan-Verbindung und
b. Mindestens ein Präpolymer enthaltend mindestens eine Silylgruppe, das der Formel (6) entspricht. gelöst werden.

Die Imingruppen aufweisende Silan-Verbindung wird dabei als Haftvermittler eingesetzt. Solche Zusammensetzungen sind hervorragend lagerstabil und weisen auch nach mehreren Wochen keinerlei Instabilitäten auf. Die Zusammensetzungen sind zudem gegenüber solchen Zusammensetzungen, die herkömmliche im Stand der Technik bekannten Silan-Haftvermittler enthalten, weniger sensibel gegenüber Wasser. Insbesondere kleine Mengen an Wasser führen entgegen den Eigenschaften von bekannten härtbaren Zusammensetzungen nicht zu einer vorzeitigen Aushärtung der Komponenten. Besonders überraschend wurde festgestellt, dass die erfindungsgemäßen härtbaren Zusammensetzungen zusätzlich zu den vorgenannten positiven Eigenschaften einen besonders guten Duft entfalten. Zum einen ist dies bei der Anwendung, also der Aushärtung der Fall, wo sich angenehmer, wahrnehmbarer Duft entfaltet, andererseits ist aber auch der Ausstoß von solchen Düften, die allgemein als Fehlgeruch (schlechter oder wenig angenehmer Geruch) wahrgenommen werden deutlich verringert.

Bevorzugt sind erfindungsgemäß solche härtbaren Zusammensetzungen, die weniger als 1 Gew.-%, bevorzugt weniger als 0,1 Gew.-% und weiter bevorzugt weniger als 0,01 Gew.-%, Wasser enthalten und insbesondere bevorzugt frei von Wasser sind. Solche Zusammensetzungen weisen eine besonders hohe Stabilität bei trotzdem guten Aushärtungseigenschaften auf.

Bevorzugt sind erfindungsgemäß solche härtbaren Zusammensetzungen, die weiterhin keine Wasserfänger, insbesondere kein Vinyltrimethoxysilan und Vinyltriethoxysilan, enthalten.

Bevorzugt sind zudem solche härtbaren Zusammensetzungen, die weiterhin als Komponente c) Calciumcarbonat enthalten, bevorzugt in Mengen von 1 bis 60 Gew.-%, bevorzugt 10 bis 50 Gew.-%, insbesondere bevorzugt 20 bis 40 Gew.-%, bezogen auf das Gesamtgewicht der Zusammensetzung. Calciumcarbonat dient dabei als Füllstoff. Calciumcarbonat weist zwar bekanntermaßen auch wasserabsorbierende Eigenschaften auf, fällt aber im Sinne dieser Erfindung nicht unter die Gruppe der sogenannten Wasserfänger. Calciumcarbonat ist im Sinne dieser Erfindung ausschließlich als Füllstoff zu verstehen. Härtbare Zusammensetzungen, die weiterhin als Komponente c) Calciumcarbonat enthalten, haben den Vorteil, dass die mechanischen Eigenschaften der Zusammensetzung über die Partikelgröße des Calciumcarbonats hervorragend an die jeweils gewünschten Eigenschaften angepasst werden können. Beispielsweise kann dadurch die Festigkeit der Zusammensetzung einwandfrei gesteuert werden.

In einer besonders bevorzugten Ausführungsform der vorliegenden Erfindung, handelt es sich bei der Imingruppen aufweisenden Silan-Verbindung der Komponente a) um ein Reaktionsprodukt aus einer Amingruppen aufweisenden Silan-Verbindung und einer Carbonylverbindung, bevorzugt mit einem Siedepunkt über 60 °C, besonders bevorzugt über 80 °C und insbesondere bevorzugt über 100 °C. Imingruppen aufweisende Silan-Verbindungen mit Carbonylverbindung mit Siedepunkt über 100°C sind besonders gut handhabbar in der Herstellung. Der Einsatz solcher Komponenten hat zudem den überraschenden Vorteil, dass die härtbaren Zusammensetzungen mit solchen Imingruppen aufweisenden Silan-Verbindungen besonders gute Dufteigenschaften aufweisen. Zum einen erzeugt die frei werdende Carbonylverbindung einen langanhaltenden, angenehmen, wahrnehmbaren Duft. Darüber hinaus ist aber auch der Ausstoß von solchen Düften, die allgemein als Fehlgeruch (schlechter oder wenig angenehmer Geruch) wahrgenommen werden insbesondere dann deutlich verringert, wenn Carbonylverbindung mit Siedepunkt über 100 °C eingesetzt werden. Die erfindungsgemäßen feuchtigkeitshärtenden Zusammensetzungen, deren Imingruppen aufweisenden Silan-Verbindung der Komponente a) auf Basis von Carbonylverbindungen mit einem Siedepunkt über 100 °C hergestellt wurde, weisen daher einen besonders langanhaltenden, mit einem angenehmen Geruch verbundenen Release Effekt auf und vermindern gleichzeitig den Austritt typischer Gerüche vergleichbarer feuchtigkeitshärtenden Zusammensetzungen.

Ein weiterer Gegenstand der Erfindung ist die Verwendung von Imingruppen aufweisenden Silan-Verbindungen als Haftvermittler in in den vorliegenden härtbaren Zusammensetzungen. Ein weiterer Gegenstand der Erfindung ist zudem die Verwendung der erfindungsgemäßen härtbaren Zusammensetzungen enthaltend mindestens eine Imingruppen aufweisende Silan-Verbindung und mindestens ein Präpolymer enthaltend mindestens eine Silylgruppe, sowie der bevorzugten Ausführungsformen dieser härtbaren Zusammensetzungen, als Kleb- und Dichtstoffe, zur Oberflächenbeschichtung und Oberflächenmodifizierung, als reaktive Vernetzer, Primer sowie Bindemittel für verschiedene Substrate wie Metalle, Glas und Glasfasern/Glasgewebe, Holz, Kunststoffe und silikatische Materialien.
Die im Sinne der vorliegenden Erfindung eingesetzten Haftvermittler, nämlich die Imingruppen aufweisenden Silan-Verbindungen der Komponente a), weisen mindestens eine Imingruppe und mindestens einen Silicium-haltigen Rest pro Molekül auf. Als Imine werden im Sinne dieser Erfindung Verbindungen bezeichnet, die die Struktureinheit der Formel (1a) 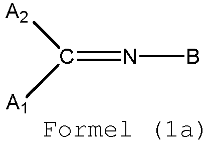 enthalten, wobei
A₁ und A₂ unabhängig voneinander Wasserstoff, oder ein organischer Rest sind, wobei die Reste A₁ und A₂ bevorzugt aus der Kondensationsreaktion (also einer Reaktion unter Abspaltung von einem Äquivalent Wasser) einer Aminfunktionellen Verbindung, beispielsweise gemäß Formel (3), mit einer Carbonylverbindung, beispielsweise gemäß Formel (4), abstammen und somit bevorzugt den Resten der eingesetzten Carbonylverbindung entsprechen, wobei für den Fall, dass die Reste von einer Verbindung, die eine Keto-Funktion aufweist, abstammen, beide Reste A₁ und A₂ jeweils ein organischer Rest sind und für den Fall, dass die Reste von einer Verbindung, die eine Aldehyd-Funktion aufweist, abstammen, mindestens einer der beiden Reste A₁ und A₂ ein organischer Rest ist und der jeweils andere Rest für Wasserstoff steht, und
B ein organischer Rest mit mindestens einem Silicium-haltigen Rest ist.

Je nach Art der Reste A1 und A2 werden solche Verbindungen oft auch als Ketimine bzw. Schiffsche Basen bezeichnet. Die im Sinne der vorliegenden Erfindung eingesetzten Haftvermittler weisen mindestens eine derartige Imingruppe im Molekül auf. Über den organischen Rest B ist die Imingruppe an einen Silicium-haltigen Rest angebunden.

In einer bevorzugten Ausführungsform stellen die erfindungsgemäß eingesetzten Imingruppen aufweisende Silan-Verbindungen der Komponente a) modifizierte Aminosilane gemäß Formel (1) dar 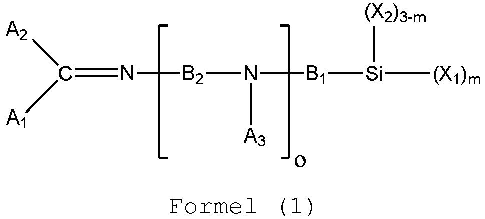 wobei
- X₁: unabhängig voneinander ein Alkoxy- oder ein Aryloxy-Rest ist, bevorzugt mit 1 bis 8 Kohlenstoffatomen, besonders bevorzugt ein Methoxy-, Ethoxy-, iso-Propoxy-, n-Propoxy-, Butoxy- oder Phenoxyrest ist,
- X₂: ein Alkyl-, Alkenyl-, Aryl-, Alkylaryl- oder Aralkylrest ist, bevorzugt ein Alkylrest mit 1 bis 20 Kohlenstoffatomen, besonders bevorzugt ein Alkylrest mit 1 bis 8 Kohlenstoffatomen ist, insbesondere bevorzugt eine Methyl-, Ethyl-, n-Propyl-, Isopropyl-, Butyl-, Isobutyl- oder tert-Butylgruppe ist,
- m: gleich 0, 1, 2 oder 3, bevorzugt 2 oder 3 ist,
- o: gleich 0 oder 1, bevorzugt 0 ist,
- A₁ und A₂: unabhängig voneinander Wasserstoff oder ein organischer Rest sind, mit der Maßgabe, dass nicht beide Reste A₁ und A₂ gleichzeitig für Wasserstoff stehen können, bevorzugt Wasserstoff, ein Alkyl-, Cycloalkyl-, Alkenyl-, Aryl-, Alkylaryl- oder Aralkylrest sind, der seinerseits substituiert sein kann, besonders bevorzugt Wasserstoff oder ein Phenyl-, Cyclohexyl- oder ein Alkylrest mit 1 bis 20 C-Atomen sind,
- B₁ und B₂: unabhängig voneinander divalente Kohlenwasserstoffreste mit 1 bis 18 C-Atomen, bevorzugt mit 1 bis 6 C-Atomen, besonders bevorzugt -CH₂-,-CH₂-CH₂-oder -CH₂-CH₂-CH₂- Reste sind,
- A₃: Wasserstoff oder ein substituierter oder unsubstituierter Rest ausgewählt aus Alkyl-, Cycloalkyl-, Alkenyl-, Aryl-, Alkylaryl- oder Aralkylrest, bevorzugt Wasserstoff, ist. Solche Verbindungen der Komponente a) führen in Verbindung mit den Verbindungen der Komponente b) zu besonders stabilen härtbaren Zusammensetzungen, insbesondere für den Fall, dass o gleich 0.

Die erfindungsgemäß eingesetzten Verbindungen der Formel (1) können nach dem in DBP 1104508 offenbarten Verfahren aus den Aminosilanen der Formel (3) und Carbonylverbindungen der Formel (4) unter Abspaltung und z.B. destillativer Entfernung von Wasser hergestellt werden. Sie können Reste dieser Edukte enthalten, wenn z.B. einer der Ausgangsstoffe in einem molaren Überschuss verwendet wurde oder die Kondensationsreaktion unvollständig verlaufen ist. Ferner können die erfindungsgemäß eingesetzten Imine (1) Dimere u.a. Oligomere enthalten, die über Si-O-Si-Gruppen miteinander verknüpft sind. 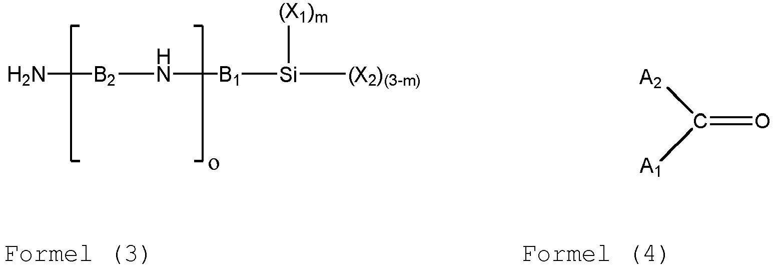 mit A₁, A₂, B₁, B₂, X₁ und X₂ wie in Formel (1)definiert.

Als Aminosilane der Formel (3) können bevorzugt 3-Aminopropyltrimethoxysilan (Dynasylan® AMMO (Evonik)), N-(2-Aminoethyl)-3-aminopropyltrimethoxysilan (Dynasylan® DAMO (Evonik)), 3-Aminopropyltriethoxysilan (Dynasylan® AMEO (Evonik®)), (3-Aminopropyl)methyldiethoxysilan (Dynasylan® 1505 (Evonik®)) und/oder 3-Aminopropyltripropoxysilan, (3-Aminopropyl)methyldimethoxysilan eingesetzt werden.

Als Aldehyde bzw. Ketone der Formel (4) werden bevorzugt Acetaldehyd, Propionaldehyd, Butyraldehyd, Benzaldehyd, Zimtaldehyd, Salicylaldehyd, Toluolaldehyd, Anisaldehyd, Acrolein, Crotonaldehyd, Aceton, Methylethylketon, Ethylbutylketon, Ethyl-n-propylketon, Methylisobutylketon, Methylamylketon, Diethylketon, Methylisopropylketon, Methyl-n-propylketon, Diisopropylketon, Diisobutylketon, Methylpentylketon, Cyclohexanon, Cyclopentanon, Acetophenon, Benzophenon und/oder Isophoron eingesetzt. Besonders bevorzugt werden solche Aldehyde bzw. Ketone der voranstehenden Liste eingesetzt, die einen Siedepunkt von über 80°C, bevorzugt über 100°C aufweisen, da diese in erfindungsgemäßen Zusammensetzungen ganz hervorragende Lagerstabilitäten aufweisen. Insbesondere bevorzugt sind 2-Heptanon, Benzaldehyd, Cyclohexanon, Anisaldehyd und/oder Zimtaldehyd. Die erfindungsgemäßen Zusammensetzungen enthalten neben mindestens einer Imingruppe aufweisenden Verbindung der Formel (1) mindestens ein Präpolymer der Formel (6) mit Alkoxysilylgruppen. Die Imine lassen sich erfindungsgemäß mit allen silylfunktionellen Verbindungen, die mindestens eine chemisch an ein Polymergerüst gebundene Alkoxysilylgruppe aufweisen, formulieren. In einer bevorzugten Ausführungsform handelt es sich beim Präpolymer der Formel (6) der Komponente b) mindestens um einen Polyether, der mindestens eine Silylgruppe und bevorzugt mindestens eine OH Gruppe trägt. Besonders bevorzugt trägt dieser Polyether der Komponente b) an mindestens einem Kettenende mindestens eine OH-Gruppe. Die erfindungsgemäßen härtbaren Zusammensetzungen enthalten neben das mindestens ein Imin der Formel (1) solche Silylgruppen tragende Präpolymere, welche terminale OH-Funktionen aufweisen. Derartige silylierte Polymere werden beispielsweise in der EP 2 093 244 beschrieben, und können durch Alkoxylierung von epoxyfunktionellen Silanen an Doppelmetallcyanid-Katalysatoren hergestellt werden. Diese Produkte werden im Weiteren als Silylpolyether bezeichnet. Die Silylpolyether, die sowohl Alkoxysilanfunktionen innerhalb der Sequenz der Oxyalkyleneinheiten der Polyetherkette als auch neue Alkoxysilanfunktionen in ihren Termini aufweisen können, erlauben es, die Ankergruppendichte in dem angestrebten Präpolymer nach Belieben, d.h., angepasst auf die jeweilige anwendungstechnische Fragestellung einzustellen. Eine Silylgruppe im Rahmen dieser Erfindung ist durch unterschiedliche oder gleiche organische oder oxyorganische Reste gekennzeichnet. In der vorliegenden Zusammensetzungen handelt es sich bei der Verbindung der Komponente b) mindestens um einen Silylpolyether der Formel(6), 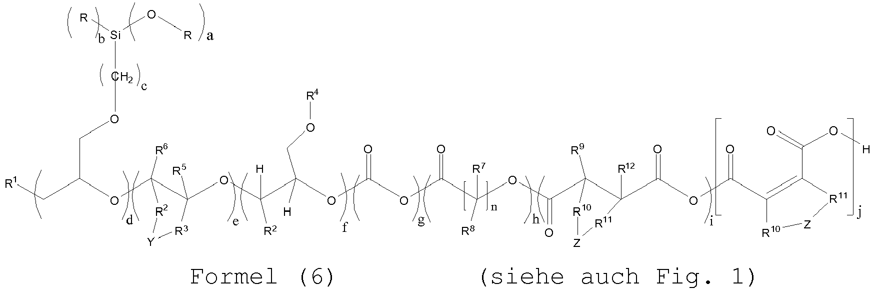 wobei
- a: eine ganze Zahl von 1 bis 3, vorzugsweise 3 ist,
- b: eine ganze Zahl von 0 bis 2, vorzugsweise 0 bis 1, besonders bevorzugt 0 ist,
und die Summe von a und b gleich 3 ist,
- c: eine ganze Zahl von 0 bis 22, vorzugsweise von 1 bis 12, besonders bevorzugt von 2 bis 8, ganz besonders bevorzugt von 0 bis 4 und insbesondere gleich 1 oder 3 ist,
- d: eine ganze Zahl von 1 bis 1.000, bevorzugt größer 1 bis 100, besonders bevorzugt 4 bis 20 und ganz besonders bevorzugt 5 bis 12 und insbesondere größer 4 bis 10 ist,
- e: eine ganze Zahl von 0 bis 10.000, bevorzugt 1 bis 2000, besonders bevorzugt 5 bis 1000 und insbesondere 10 bis 500 ist,
- f: eine ganze Zahl von 0 bis 1.000, bevorzugt größer 0 bis 100, besonders bevorzugt 1 bis 50 und insbesondere 0 bis 30 ist,
- g: eine ganze Zahl von 0 bis 1.000, bevorzugt größer 0 bis 200, besonders bevorzugt 1 bis 100 und insbesondere 0 bis 70 ist,
- h, i und j: ganze Zahlen von 0 bis 500, bevorzugt größer 0 bis 300, besonders bevorzugt 1 bis 200 und insbesondere 0 bis 100 ist,
- n: eine ganze Zahl zwischen 2 und 8 ist und mit der Maßgabe, dass die Fragmente mit den Indices d bis j untereinander frei permutierbar, d.h. in der Sequenz innerhalb der Polyetherkette gegeneinander austauschbar sind
und
- R: entspricht einem oder mehreren gleichen oder verschiedenen Resten, ausgewählt aus linearen oder verzweigten, gesättigten, einfach oder mehrfach ungesättigten Kohlenwasserstoffresten oder Halogenalkylresten jeweils bevorzugt mit 1 bis 20, insbesondere 1 bis 6 Kohlenstoffatomen, bevorzugt ist R eine Methyl-, Ethyl-, Propyl-, Isopropyl-, n-Butyl- oder sekundäre-Butylgruppen; sowie
- R¹: entspricht einem gesättigten oder ungesättigten, gegebenenfalls verzweigten Rest, der vorzugsweise über ein Sauerstoffatom angebunden ist, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine ggf. einfach oder mehrfach annelierte aromatische Aryloxy-Gruppe, wobei der Rest R¹ im Silylpolyether vorzugsweise kein Siliziumatom aufweist, sowie
- Y: kann nicht vorhanden sein, oder aber eine Methylenbrücke mit 1 oder 2 Methyleneinheiten sein, ist Y vorhanden, so sind die Reste R² und R³ jeweils divalent (zweiwertig); ist Y nicht vorhanden, so sind die Reste R² und R³ jeweils monovalent (einwertig).
- R² und R³: entsprechen unabhängig voneinander Wasserstoff oder einem gesättigten oder gegebenenfalls einfach oder mehrfach ungesättigten, auch, beispielsweise mit Halogen- oder Hydroxylgruppen, weiter substituierten, linearen oder verzweigten einwertigen (wenn Y nicht vorhanden) oder zweiwertigen (wenn Y vorhanden) Kohlenwasserstoffrest, bevorzugt mit 1 bis 20, weiter bevorzugt mit 1 bis 10 Kohlenstoffatomen und besonders bevorzugt mit 1 bis 6 Kohlenstoffatomen; bevorzugt handelt es sich um einen linearen, nicht substituierten Kohlenwasserstoffrest mit 1 bis 6 Kohlenstoffatomen; der Kohlenwasserstoffrest kann cycloaliphatisch über das Fragment Y verbrückt sein; ist Y vorhanden, so kann keiner der Reste R² oder R³ für Wasserstoff stehen, vielmehr stehen dann beide Reste R² oder R³ für zweiwertige Kohlenwasserstoffe; R²-Y-R³ kann eine -CH₂CH₂CH₂CH₂-Gruppe, Y damit eine - (CH₂CH₂-) -Gruppe sein und R² und R³ jeweils ein zweiwertiger Kohlenwasserstoffrest mit einem Kohlenstoffatom. Ganz besonders bevorzugt entsprechen beide Reste R² und R³ Wasserstoff oder einer der Reste R² oder R³ entspricht Wasserstoff und der jeweils andere Rest entspricht einem Methyl-, Ethyl-, Propyl-, Butyl-, oder Phenylrest. Vorzugsweise ist zumindest einer der beiden Reste R² oder R³ Wasserstoff.
- R⁴: entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
- R⁵ und R⁶: entsprechen unabhängig voneinander Wasserstoff oder einem gesättigten oder gegebenenfalls einfach oder mehrfach ungesättigten, auch, beispielsweise mit Halogen- oder Hydroxylgruppen, weiter substituierten, linearen oder verzweigten einwertigen Kohlenwasserstoffrest, bevorzugt mit 1 bis 20, weiter bevorzugt mit 1 bis 10 Kohlenstoffatomen und besonders bevorzugt mit 1 bis 6 Kohlenstoffatomen; bevorzugt handelt es sich um einen linearen, nicht substituierten Kohlenwasserstoffrest mit 1 bis 6 Kohlenstoffatomen; bevorzugt sind die Reste R⁵ und R⁶ unabhängig voneinander Wasserstoff, Methyl-, Ethyl-, Propyl-, Butyl-, oder Phenylrest,und ganz besonders bevorzugt sind beide Reste R⁵ und R⁶ gleich Wasserstoff,
- R⁷ und R⁸: sind unabhängig voneinander entweder Wasserstoff, Alkyl-, Alkoxy-, Aryl- oder Aralkylgruppen,
- R⁹, R¹⁰, R¹¹ und R¹²: sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylenals auch Alkenylenrest darstellen kann.

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (6) wiedergegeben sind, solche mit der doppelten, zum Teil dreifachen oder gar vielfachen Molmasse enthalten. Formel (6) gibt mithin die komplexe chemische Realität nur vereinfacht wieder.

Somit stellen die Silylpolyether Zusammensetzungen dar, die auch Verbindungen enthalten, in denen die Summe der Indices (a) plus (b) in Formel (6) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (6) ausgebildet werden. Diese Reaktion kann mehrfach ablaufen bis z.B. alle RO-Gruppen am Silizium gegen weitere Moleküle der Formel (6) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.
Die angegebenen Werte und Vorzugsbereiche für die Indizes (a) bis (j) sind somit auch nur als Mittelwerte über die verschiedenen, einzeln nicht fassbare Spezies zu verstehen. Die Vielfalt an chemischen Strukturen und Molmassen spiegelt sich auch in den für Silylpolyether typischen und für konventionelle DMC-basierende Polyether völlig ungewöhnlichen breiten Molmassenverteilungen von M_{w}/Mₙ von meist ≥ 1,5 wieder.

Als Starter oder Startverbindungen für die Alkoxylierungsreaktion können alle Verbindungen der Formel (7)

R¹-H Formel (7)

(das H gehört zur OH-Gruppe einer mindestens eine Hydroxylgruppe aufweisenden Verbindung, wie z. B. eines Alkohols oder einer phenolischen Verbindung) allein oder in Mischungen miteinander eingesetzt werden, die gemäß Formel (7) mindestens eine reaktive Hydroxylgruppe aufweisen. R¹ entspricht einem gesättigten oder ungesättigten, gegebenenfalls verzweigten Rest, der über mindestens ein Sauerstoffatom einer Hydroxylgruppe verfügt, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine ggf. einfach oder mehrfach annelierte aromatische Aryloxy-Gruppe. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Unter Startverbindungen werden Substanzen verstanden, die den Anfang (Start) des herzustellenden Polyethermoleküls (6) bilden, das durch die Anlagerung von epoxidfunktionellen Monomeren erhalten wird. Die in dem Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) eingesetzt.
Als OH-funktionelle Startverbindungen R¹-H (7) werden vorzugsweise Verbindungen mit Molmassen von 18 bis 10.000 g/mol, insbesondere 50 bis 2000 g/mol und mit 1 bis 8, bevorzugt mit 1 bis 4 Hydroxylgruppen und weiter bevorzugt mit mindestens 8 Kohlenstoffatomen pro Molekül, eingesetzt.

Beispielhaft für Verbindungen der Formel (7) seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt. Dabei stellt der jeweils korrespondierende Alkoxyrest den Rest R7 dar, also ist bsp. Butyloxy der Rest R7 im Fall von Butanol.

Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen. Die Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (6).

Bevorzugt ist die Alkoxysilaneinheit in der Verbindung der Formel (6) eine Trialkoxysilaneinheit.

Die Imin-funktionellen Haftvermittler lassen sich ebenfalls in Mischungen mit konventionellen monomeren Silanen der Formel (8)

W_{y}SiV_{(4-y)} (8)

einsetzen, wobei W gleiche oder verschiedene nicht hydrolysierbare Gruppen, V gleiche oder verschiedene hydrolysierbare Gruppen oder Hydroxygruppen und y = 1, 2, 3 oder 4 darstellt. Die Iminverbindungen sollten dabei möglichst rein sein und keine reaktiven primären oder sekundären Amingruppen besitzen, welche mit den ebenfalls reaktiven Silanen der Formel (8) reagieren können.

In Formel (8) können die hydrolysierbaren Gruppen V beispielsweise , Halogen-, Alkoxy- (bevorzugt Methoxy-, Ethoxy-, i-Propoxy-, n-Propoxy- oder Butoxy-), Aryloxy-(bevorzugt Phenoxy-), Acyloxy- (bevorzugt Acetoxy- oder Propionyloxy-), Acyl- (bevorzugt Acetyl-) -Gruppen sein. Der nicht hydrolysierbare Rest W kann beispielsweise ein Alkyl-, Alkenyl-, Alkinyl-, Aryl-, Alkylaryl- oder Aralkyl-Rest sein. Die Alkylkette kann 0 bis 50, vorzugsweise 0 bis 22 Kohlenstoffatome aufweisen und auch durch Heteroatome wie Sauerstoff oder Stickstoff oder Schwefel unterbrochen sein oder auch ein Siliconrest sein. Der aromatische Rest kann auch heteroaromatisch sein. Die Reste W und V können ggf. einen oder mehrere übliche Substituenten, wie beispielsweise Halogen oder Alkoxy aufweisen.

Nicht hydrolysierbare Reste W nach der Formel (8) mit funktionellen Gruppen können ausgewählt werden aus dem Bereich der Glycidyl- oder Glycidyloxyalkylen-Reste, wie beispielsweise □-Glycidyloxyethyl, □-Glycidyloxypropyl, □-Glycidyloxypropyl, □-Glycidyloxypentyl, □-Glycidyloxyhexyl oder 2-(3,4-Epoxycyclohexyl)ethyl, der Methacryloxyalkylen- und Acryloxyalkylen-Reste, wie beispielsweise Methacryloxymethyl, Acryloxymethyl, Methacryloxyethyl, Acryloxyethyl, Methacryloxypropyl, Acryloxypropyl, Methacryloxybutyl oder Acryloxybutyl, und dem 3-Isocyanatopropyl-Rest.

Solche organofunktionellen monomeren Silane sind zum Beispiel Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan und/oder Hexadecyltrimethoxysilan allein oder in Mischungen miteinander. Einen Einstieg in diese Thematik bietet "Silylated Surfaces", edited by Donald E. Leyden and Ward T. Collins, Gordon and Breach Science Publishers, Inc.,1980, ISBN 0-677-13370-7.

Es ist generell dem Experten überlassen, die für das erwünschte Eigenschaftsprofil geeigneten Komponenten auszuwählen.

Die erfindungsgemäßen, härtbaren Mischungen eignen sich beispielsweise als Grundstoffe für die Herstellung von Klebstoffen, zur Oberflächenbeschichtung und Oberflächenmodifizierung, als reaktive Vernetzer, als Haftvermittler und Primer sowie Bindemittel oder Dichtstoffe für verschiedene Substrate wie Metalle, Glas und Glasfasern/Glasgewebe, Holz, Holzwerkstoffen, Naturfasern, sowie beispielsweise auch Kork und generell silikatischen Materialien. So erweist sich der gezielte Einbau der sich über hydrolytische Prozesse an Mauerwerk, Beton, Mörtel, usw. verankernden Alkoxysilylgruppierungen als äußert vorteilhaft.

Die erfindungsgemäßen Zusammensetzungen können als Bindemittel, das heißt zur Verbindung von gleichartigen oder verschiedenartigen Stoffen miteinander, bei der Herstellung von Holzwerkstoffen, wie beispielsweise Spanplatten oder MDF-Platten, der Verklebung der Holz- oder Korkpartikel dienen und stehen so auch für Fußböden, Parkett und Laminatanwendungen zur Verfügung.

Die erfindungsgemäßen Zusammensetzungen können auch thermoplastische Eigenschaften besitzen und damit auch zur Herstellung von Formteilen dienen, bei denen ein temperaturabhängiges Fließverhalten notwendig ist. Die Formmassen können in Verfahren wie beispielsweise Spritzgießen, Extrudieren oder Warmpressen verwendet werden. Die erfindungsgemäßen härtbaren Mischungen können auch ohne Katalysatoren eingesetzt werden, so dass eine weitere Vernetzung und Härtung während des Formgebungsprozesses unterbleibt. Nach der Vernetzung gehen die Silylgruppen tragenden Polymere in duroplastische Produkte über.

Auf dieser Weise können polymere Werkstoffe gegebenenfalls mit schaumartiger Struktur erhalten werden, indem die bekannten Verfahren der freien bzw. katalytischen Aushärtung von Präpolymersystemen angewendet werden. Durch die Variabilität und Vielzahl der möglichen erfindungsgemäßen Zusammensetzungen kann anwendungsgerecht die zu wählende Vorzugsform bestimmt werden.

Bevorzugt werden die Imin-funktionellen Silane als latente Haftvermittler mit Silylpolyethern der Formel (6) formuliert, wobei die Silylpolyether im Mittel mehr als eine Alkoxysilylfunktion pro Hydroxylgruppe aufweisen.

Die erfindungsgemäßen, härtbaren Mischungen, enthaltend mindestens eine Komponente der Formel (1), können z. B. zur Beschichtung und Modifizierung von flächigen, partikulären, faserigen Oberflächen und Geweben und als Dichtstoffe eingesetzt werden. Die Beschichtung kann z. B. eine Klebstoffbeschichtung, insbesondere eine geschäumte Klebstoffbeschichtung sein. Die härtbare Mischung kann auch in Form einer Dispersion oder Lösung eingesetzt werden. Sollen diese erfindungsgemäßen Zusammensetzungen schäumbar sein, enthalten diese ein oder mehrere, gegebenenfalls chemisch gebildete Treibmittel.

Die zu beschichtenden Oberflächen können durch bekannte Mittel wie sprühen, streichen, tauchen, etc. beschichtet werden. Die zu verklebenden Oberflächen werden bei dem Verfahren vorzugsweise aufeinandergepresst. Das Aufbringen der gegebenenfalls schäumbaren Mischung zur Herstellung der Verklebung erfolgt vorzugsweise aus einer Druckdose, wobei die Schaumbildung durch das in der Mischung enthaltene, gegebenenfalls auch durch chemische Reaktion freigesetzte Treibmittel erfolgt.

Bevorzugte härtbare Zusammensetzungen enthalten weiterhin als Komponente d) einen Härtungskatalysator, bevorzugt einen Zinnkatalysator. Die erfindungsgemäßen härtbaren Zusammensetzungen haben den Vorteil, dass sie auch in Gegenwart von Härtungskatalysator und/oder geringen Mengen von Wasser derart stabil sind, dass eine Formulierung als Einkomponentensystem (1K-System) möglich ist. Ein solches Einkomponentensystem hat den Vorteil, dass es deutlich einfacher anzuwenden ist, also besonders anwenderfreundlich ist, und zudem Verpackungs- und Herstellkosten spart. Bevorzugte härtbare Zusammensetzungen liegen demnach als Einkomponentensystem vor.

Als Katalysatoren für die Vernetzung oder Polymerisation der erfindungsgemäßen Zusammensetzungen können die bekannten Polyurethanisierungs-, Allophanatisierungs- oder Biuretisierungskatalysatoren verwendet werden, die dem Fachmann an sich bekannt sind. Hierzu zählen Verbindungen, wie beispielsweise die Zinksalze Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Weiterhin können als Katalysatoren die üblicherweise verwendeten organischen Zinnverbindungen, wie z.B. Dibutylzinndilaurat, Dioctylzinndilaurat, Dibutylzinndiacetylacetonat, Dioctylzinndiacetylacetonat, Dibutylzinndiacetat oder Dibutylzinndioctoat etc., verwendet werden. Des Weiteren können auch Wismutkatalysatoren, z.B. der Borchi-Katalysator, Titanate, z.B. Titan(IV)isopropylat, Eisen(III)-Verbindungen, z.B. Eisen(III)-acetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Die erfindungsgemäßen, härtbaren Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen. Der Inhalt der Beschreibung und der Ansprüche WO 2005/100482 wird hiermit als Bestandteil dieser Offenbarung eingeführt.

Der Katalysator bzw. die photolatente Base wird in Mengen von 0,001 bis 5,0 Gew.-%, bevorzugt 0,01 bis 1,0 Gew.-% und besonders bevorzugt 0,05 bis 0,5 Gew.-% bezogen auf den Festgehalt des Verfahrensprodukts eingesetzt. Der Katalysator bzw. die photolatente Base kann in einer Portion oder aber auch portionsweise oder auch kontinuierlich zugegeben werden. Bevorzugt ist Zugabe der gesamten Menge in einer Portion.
Als weitere Komponenten können die Zusammensetzungen Füllstoffe, Lösungsmittel, Schaumstabilisatoren sowie Katalysatoren zur Beschleunigung der Aushärtung des Schaumes enthalten. Füllstoffe führen dabei zu einer Verbesserung der Reißfestigkeit wie auch der Bruchdehnung. Gängige Füllstoffe sind beispielsweise Calciumcarbonat, pyrogene Kieselsäure und Ruß. Die unterschiedlichen Füllstoffe werden oftmals auch in Kombination eingesetzt. Als Füllstoffe eignen sich dabei sämtliche Materialien, wie sie im Stand der Technik vielfach beschrieben sind. Die Füllstoffe werden bevorzugt in einer Konzentration von 0 bis 90 Gew.-% bezogen auf die fertige Mischung eingesetzt, wobei Konzentrationen von 5 bis 70 Gew.-% besonders bevorzugt sind.
Die erfindungsgemäßen Zusammensetzungen können zudem auch noch weitere organische Substanzen, bevorzugt Flüssigkeiten und Lösungsmittel enthalten. Als Lösungsmittel werden bevorzugt Verbindungen eingesetzt, die über ein Dipolmoment verfügen.
Des Weiteren können den Zusammensetzungen auch an sich bekannte funktionelle Stoffe wie rheologische Additive, Wasserfänger, Thixotropiermittel, Flammschutzmittel, Entschäumer, Entlüfter, filmbildende Polymere, antimikrobielle und konservierende Stoffe, Antioxidantien, Farbstoffe, Färbemittel und Pigmente, Frostschutzmittel, Fungizide, Haftvermittler und/oder Reaktivverdünner sowie Weichmacher und Komplexbildner, Sprühhilfsmittel, Netzmittel, Vitamine, Wuchsstoffe, Hormone, Duftstoffe, Lichtschutzmittel, Radikalfänger, UV-Absorber sowie weitere Stabilisatoren zugesetzt werden. Bevorzugte härtbare Zusammensetzungen weisen bevorzugt als Komponente e) weiterhin mindestens eine Komponente ausgewählt aus Wasserfängern, Weichmachern und/oder Rheologiemodifizierern auf.

Für die erfindungsgemäßen Zusammensetzungen existieren zahllose verschiedene Anwendungen im Bereich der Kleb-, Dicht, Binde- und Fugendichtstoffe. Dabei sind sie für zahllose unterschiedliche Untergründe, wie z.B. mineralische Untergründe, Metalle, Kunststoffe, Glas, Keramik, Holz, Holzwerkstoffe, Naturfaser oder auch Kork etc., geeignet. Prinzipiell eignen sich die Zusammensetzungen bzw. die daraus hergestellten Schäume zum Verkleben von jedweden Gegenständen. Vor allem aber sind sie hoch geeignet, wenn die zu verklebenden Flächen uneben sind oder aber kleinteilige Fasern oder Partikel, sowie auch beispielsweise Kork, miteinander zu einem Verbundwerkstoff verbunden werden sollen. Dies ist z.B. beim Verkleben von Bruchstellen, die durch Absplitterungen oder Materialverbiegungen nicht mehr genau übereinander passen, der Fall, oder auch beim Verkleben von Fußleisten, Deckenleisten oder sonstigen Verzierungen auf einer unebenen Wandoberfläche. Hier besitzen die Schäume den Vorteil, auch Hohlräume gut ausfüllen zu können.

Die erfindungsgemäßen Zusammensetzungen und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Weitere Ausgestaltungen der Erfindung ergeben sich aus den Ansprüchen, deren Offenbarungsgehalt vollumfänglich Teil dieser Beschreibung ist.
In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Experimenteller Teil:

### Bestimmung der Produktzusammensetzung:

Die Bestimmung des Gehalts an Imin im Reaktionsprodukt erfolgte mit Hilfe der ¹³C-NMR-Spektroskopie. Verwendet wurde ein NMR Spektrometer vom Typ Bruker Avance 400. Die Proben wurden dazu in CDCl₃ gelöst.

### Herstellung der Iminverbindungen nach dem in DBP 1104508 offenbarten Verfahren:

### Versuch I1:

1 mol 3-Aminopropyltriethoxysilan (Dynasylan® AMEO (Evonik®))wurde in einem mit Rührer und Destillationsbrücke ausgestatteten 1 L-Dreihalskolben vorgelegt und auf 60 °C erwärmt. Bei eingeschalteter Vakuumpumpe und einem Innendruck von ca. 30 mbar wurde 1 mol Cyclohexanon innerhalb von 1 h zugetropft. Entstehendes Reaktionswasser wurde bei 60 °C kontinuierlich destillativ entfernt und in einer Destillatvorlage aufgefangen. Die Reaktion und Destillation wurde nach Zugabeende für 3 h fortgesetzt. Das erhaltene Ketimin wurde abgekühlt und unter Feuchtigkeitsausschluss abgefüllt. Lt. 13C NMR Analyse wurde 97 % des eingesetzten Cyclohexanons zum Ketimin umgesetzt.

### Versuch 12:

Wie im Versuch I1 beschrieben, wurde 1 mol 3-Aminopropyltriethoxysilan (Dynasylan® AMEO (Evonik®)) mit 1 mol Benzaldehyd bei 60 °C unter kontinuierlichem Abdestillieren von Wasser zur Reaktion gebracht. Die erhaltene Schiffsche Base wurde abgekühlt und unter Feuchtigkeitsausschluss abgefüllt. Lt. 13C NMR Analyse wurde 100 % des eingesetzten Benzaldehyds zum Imin umgesetzt.

### Versuch 13:

Wie im Versuch I1 beschrieben, wurde 1 mol 3-Aminopropyltriethoxysilan (Dynasylan® AMEO (Evonik®)) mit 1 mol 2-Heptanon bei 60 °C unter kontinuierlichem Abdestillieren von Wasser zur Reaktion gebracht. Das erhaltene Ketimin wurde abgekühlt und unter Feuchtigkeitsausschluss abgefüllt. Lt. 13C NMR Analyse wurde 100 % des eingesetzten 2-Heptanons zum Imin umgesetzt.

### Versuch 14:

Wie im Versuch I1 beschrieben, wurde 1 mol 3-Aminopropyltriethoxysilan (Dynasylan® AMEO (Evonik®)) mit 1,1 mol Butyraldehyd bei 100 °C unter kontinuierlichem Abdestillieren von Wasser bei Normaldruck zur Reaktion gebracht. Das erhaltene Ketimin wurde abgekühlt und unter Feuchtigkeitsausschluss abgefüllt. Lt. 13C NMR Analyse wurde ca. 95% des eingestzten Aminopropyltriethoxysilans zum Imin umgesetzt.

### Versuch 15:

Wie im Versuch I1 beschrieben, wurde 1 mol 3-Aminopropyltriethoxysilan (Dynasylan® AMEO (Evonik®)) mit 1 mol Anisaldehyd bei 104 °C unter kontinuierlichem Abdestillieren von Wasser zur Reaktion gebracht. Das erhaltene Ketimin wurde abgekühlt und unter Feuchtigkeitsausschluss abgefüllt. Lt. 13C NMR Analyse wurde 100 % des eingesetzten Anisaldehyds zum Imin umgesetzt.

### Versuch 16:

Wie im Versuch I1 beschrieben, wurde 1 mol 3-Aminopropyltriethoxysilan (Dynasylan® AMEO (Evonik®)) mit 1 mol Zimtaldehyd bei 104 °C unter kontinuierlichem Abdestillieren von Wasser zur Reaktion gebracht. Das erhaltene Ketimin wurde abgekühlt und unter Feuchtigkeitsausschluss abgefüllt. Lt. 13C NMR Analyse wurde 100 % des eingesetzten Zimtaldehyds zum Imin umgesetzt.

### Herstellung der Silylpolyether:

Für die Lagerstabilitätsversuche wurde ein Silylpolyether eingesetzt, welcher terminale OH-Funktionen aufweist und durch das in der EP 2 093 244 beschriebene Verfahren durch Alkoxylierung von 3-Glycidyloxypropyltriethoxysilan (GLYEO) an Doppelmetallcyanid-Katalysatoren hergestellt worden ist.

### Silylpolyether SP1:

Hochmolekularer, Polypropylenglykol-gestarteter Polyether der mittleren Molmasse 16000 g/mol und vierfacher Triethoxysilanfunktionalität.

Chemischer Aufbau gemäß Monomerendosage: Polypropylenglykol (Mw 2000 g/mol) + 86 mol PO + (4 mol GLYEO / 136 mol PO) Epoxidsauerstoffgehalt <0,05 %, M_{w} lt. GPC 21400 g/mol, Mn lt. GPC 8050 g/mol, Viskosität (25,0 °C): 13100 Pa.s

### Urethanisierter Silylpolyether USP1:

Silylpolyether SP1 wurde anschließend Urethanisiert nach dem in der DE 10 2009 028636 offenbarten Verfahren durch Umsetzung der terminalen OH-Funktionen des Silylpolythers mit einem 20 mol-%igen Überschuss an Isophorondiisocyanat (Vestanat IPDI; Evonik Industries AG) und abschließender Abreaktion überschüssiger NCO-Gruppen mit einem Polypropylenglykolmonobutylether der mittleren Molmasse Mw von 400 g/mol. Viskosität des Reaktionsprodukts (25,0 °C): 32800 Pa.s, Isocyanatgehalt <0,1 %.

### Silylterminiertes Polymer USP1

Polymer ST 61 der Evonik Hanse Chemie, Viskosität (25,0 °C): 35000 Pa.s, Isocyanatgehalt <0,1 %.

### Härtungskatalysator:

Zur Herstellung härtbarer Mischungen wurde Dioctylzinndiacetylacetonat (TIB-Kat 223 der Fa. TIB Chemicals) verwendet.

### Herstellung der härtbaren Mischungen:

Zur Herstellung der härtbaren Mischungen wurden je 78 g Silylpolyether SP1 oder USP1 oder USP2, 1,6 g Silan-Haftvermittler und 0,4 g Dioctylzinndiacetylacetonat (TIB-Kat 223 der Fa. TIB Chemicals) eingewogen und bei Raumtemperatur unter Feuchtigkeitsausschluss und Argonatmosphäre in einem Speedmixer intensiv zu einer homogenen und blasenfreien Mischung verarbeitet. Jeweils 40 g dieser so hergestellten 1K-Formulierung wurden in ein 50 ml Probenglas mit Schraubverschluss gefüllt. Die Proben wurden anschließend mit trockenem Argon überlagert und die Probengefäße verschlossen und versiegelt.

### Untersuchungen der Lagerstabilität:

Von jeder Formulierung wurde eine Probe bei 60 °C in einem Wärmeschrank unter Ausschluss von Feuchtigkeit gelagert. Die Entwicklung der Viskosität als Indiz für das Einsetzen der Vernetzungsreaktion wurde in der Folgezeit visuell beobachtet.

**Tabelle 1: Lagerung bei 60 °C**

| Haftvermittler | 0 Tage (Start) | 2 Tage | 4 Tage | 7 Tage | 14 Tage | 21 Tage | 28 Tage |
|---|---|---|---|---|---|---|---|
| Referenz, nicht Erfindungsgemäß, SP1 und Dynasylan AMEO | Niedrig vi | Hoch viskos | fest | fest | fest | fest | fest |
| SP1 und Imin I1 | Niedrig vi | Niedrig vi | Niedrig vi | Niedrig vi | Niedrig v: | Mittel Viskos | Hoch viskos |
| SP1 und Imin 12 | Niedrig vi | Niedrig vi | Niedrig vi | Niedrig vi | Mittel viskos | Hoch Viskos | fest |
| SP1 und Imin 13 | Niedrig vi | Niedrig vi | Niedrig vi | Niedrig vi | Mittel viskos | Hoch viskos | fest |
| SP1 und Imin 14 | Niedrig vi | Niedrig vi | Niedrig vi | Mittel viskos | fest | fest | fest |
| SP1 und Imin 15 | Niedrig viskos | Niedrig viskos | Niedrig viskos | Niedrig viskos | Mittel viskos | Hoch viskos | fest |
| SP1 und Imin 16 | Niedrig viskos | Niedrig viskos | Niedrig viskos | Niedrig Viskos | Mittel viskos | Hoch viskos | fest |

Die Tests zur Lagerstabilität zeigen deutlich die hervorragende Lagerstabilität erfindungsgemäßer härtbarer Mischungen I1 bis 16 gegenüber der Referenz. Wie der Vergleich der Lagerstabilität 14 mit I1, 12, 13, 15, und 16 zeigt lässt sich zudem deutlich erkennen, dass die Lagerstabilität erfindungsgemäßer härtbaren Mischungen besonders hervorragend ist, wenn es sich bei der Imingruppen aufweisenden Silan-Verbindung der Komponente a) um ein Reaktionsprodukt aus einer Amingruppen aufweisenden Silan-Verbindung und einer Carbonylverbindung mit einem Siedepunkt über 80 °C bzw. 100 °C handelt.

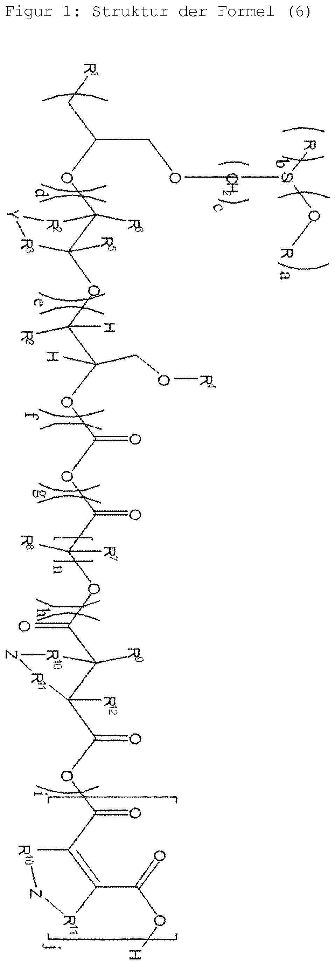

## Patentansprüche

1. Härtbare Zusammensetzung enthaltend
a. Mindestens eine Imingruppen aufweisende Silan-Verbindung
b. Mindestens ein Präpolymer enthaltend mindestens eine Silylgruppe,
wobei es sich bei der Verbindung der Komponente b) mindestens um einen Silylpolyether der Formel(6)handelt 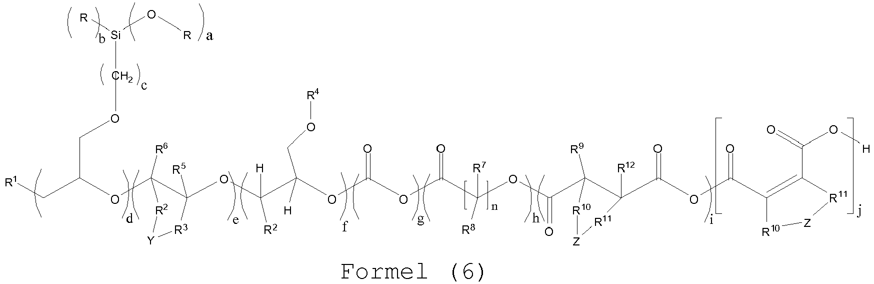 wobei
a eine ganze Zahl von 1 bis 3, vorzugsweise 3 ist,
b eine ganze Zahl von 0 bis 2, vorzugsweise 0 bis 1, besonders bevorzugt 0 ist, und die Summe von a und b gleich 3 ist,
c eine ganze Zahl von 0 bis 22, vorzugsweise von 0 bis 12, besonders bevorzugt von 0 bis 8, ganz besonders bevorzugt von 0 bis 4 und insbesondere gleich 1 oder 3 ist,
d eine ganze Zahl von 1 bis 1.000, bevorzugt 1 bis 100, besonders bevorzugt 4 bis 20 und ganz besonders bevorzugt 5 bis 10 und insbesondere größer 4 bis 10 ist,
e eine ganze Zahl von 0 bis 10.000, bevorzugt 1 bis 2000, besonders bevorzugt 5 bis 1000 und insbesondere 10 bis 500 ist,
f eine ganze Zahl von 0 bis 1.000, bevorzugt größer 0 bis 100, besonders bevorzugt 1 bis 50 und insbesondere 0 bis 30 ist,
g eine ganze Zahl von 0 bis 1.000, bevorzugt größer 0 bis 200, besonders bevorzugt 1 bis 100 und insbesondere 0 bis 70 ist,
h, i und j ganze Zahlen von 0 bis 500, bevorzugt 0 bis 300, besonders bevorzugt 0 bis 200 und insbesondere 0 bis 100 ist,
n eine ganze Zahl zwischen 2 und 8 ist und mit der Maßgabe, dass die Fragmente mit den Indices d bis j untereinander frei permutierbar, d.h. in der Sequenz innerhalb der Polyetherkette gegeneinander austauschbar sind und
R entspricht einem oder mehreren gleichen oder verschiedenen Resten, ausgewählt aus linearen oder verzweigten, gesättigten, einfach oder mehrfach ungesättigten Kohlenwasserstoffresten oder Halogenalkylresten jeweils bevorzugt mit 1 bis 20, insbesondere 1 bis 6 Kohlenstoffatomen, bevorzugt ist R eine Methyl-, Ethyl-, Propyl-, Isopropyl-, n-Butyl- oder sekundäre-Butylgruppen;
R¹ entspricht einem gesättigten oder ungesättigten, gegebenenfalls verzweigten Rest, der vorzugsweise über ein Sauerstoffatom angebunden ist, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine ggf. einfach oder mehrfach annelierte aromatische Aryloxy-Gruppe, wobei der Rest R¹ im Silylpolyether vorzugsweise kein Siliziumatom aufweist, sowie
Y kann nicht vorhanden sein, oder aber eine Methylenbrücke mit 1 oder 2 Methyleneinheiten sein, ist Y vorhanden, so sind die Reste R² und R³ jeweils zweiwertig; ist Y nicht vorhanden, so sind die Reste R² und R³ jeweils monovalent einwertig,
R² und R³ entsprechen unabhängig voneinander Wasserstoff oder einem gesättigten oder gegebenenfalls einfach oder mehrfach ungesättigten, auch, beispielsweise mit Halogen- oder Hydroxylgruppen, weiter substituierten, linearen oder verzweigten einwertigen (wenn Y nicht vorhanden) oder zweiwertigen (wenn Y vorhanden) Kohlenwasserstoffrest, bevorzugt mit 1 bis 20, weiter bevorzugt mit 1 bis 10 Kohlenstoffatomen und besonders bevorzugt mit 1 bis 6 Kohlenstoffatomen; der Kohlenwasserstoffrest kann cycloaliphatisch über das Fragment Y verbrückt sein; ist Y vorhanden, so kann keiner der Reste R² oder R³ für Wasserstoff stehen, vielmehr stehen dann beide Reste R² und R³ für zweiwertige Kohlenwasserstoffe;
R⁴ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
R⁵ und R⁶ entsprechen unabhängig voneinander Wasserstoff oder einem gesättigten oder gegebenenfalls einfach oder mehrfach ungesättigten, auch, beispielsweise mit Halogen- oder Hydroxylgruppen, weiter substituierten, linearen oder verzweigten einwertigen Kohlenwasserstoffrest, bevorzugt mit 1 bis 20, weiter bevorzugt mit 1 bis 10 Kohlenstoffatomen und besonders bevorzugt mit 1 bis 6 Kohlenstoffatomen,
R⁷ und R⁸ sind unabhängig voneinander entweder Wasserstoff, Alkyl-, Alkoxy-, Aryl- oder Aralkylgruppen,
R⁹, R¹⁰, R¹¹ und R¹² sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann.

2. Härtbare Zusammensetzung nach Anspruch 1 **dadurch gekennzeichnet, dass** die Zusammensetzung weniger als 1 Ges.-%, bevorzugt weniger als 0,1 Gew.-%, Wasser enthält und insbesondere bevorzugt frei von Wasser ist.

3. Härtbare Zusammensetzung nach einem der Ansprüche 1 oder 2 **dadurch gekennzeichnet, dass** die Zusammensetzung weiterhin als Komponente c) Calciumcarbonat enthält, bevorzugt in Mengen von 1 bis 60 Gew.-%, bevorzugt 10 bis 50 Gew.-%, insbesondere bevorzugt 20 bis 40 Gew.-%, bezogen auf das Gesamtgewicht der Zusammensetzung.

4. Härtbare Zusammensetzung nach einem der Ansprüche 1 bis 3 **dadurch gekennzeichnet, dass** die Zusammensetzung weiterhin als Komponente d) einen Härtungskatalysator, bevorzugt einen Zinnkatalysator enthält.

5. Härtbare Zusammensetzung nach einem der Ansprüche 1 bis 4 **dadurch gekennzeichnet, dass** es sich bei der Imingruppen aufweisenden Silan-Verbindung der Komponente a) um ein Reaktionsprodukt aus einer Amingruppen aufweisenden Silan-Verbindung und einer Carbonylverbindung, bevorzugt eine Carbonylverbindung mit einem Siedepunkt über 100°C, handelt.

6. Härtbare Zusammensetzung nach einem der Ansprüche 1 bis 5 **dadurch gekennzeichnet, dass** die Zusammensetzung weiterhin keine Wasserfänger, insbesondere kein Vinyltrimethoxysilan und Vinyltrimethoxysilan, enthält.

7. Härtbare Zusammensetzung nach einem der Ansprüche 1 bis 6 **dadurch gekennzeichnet, dass** die Imingruppen aufweisende Silan-Verbindung der Komponente a) ein Aminosilan gemäß Formel (1) 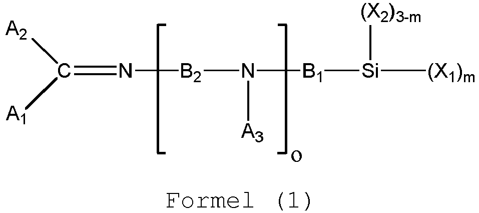 wobei
X₁ unabhängig voneinander ein Alkoxy- oder ein Aryloxy-Rest ist, bevorzugt mit 1 bis 8 Kohlenstoffatomen, besonders bevorzugtein Methoxy-, Ethoxy-, iso-Propoxy-, n-Propoxy-, Butoxy- oder Phenoxyrest ist,
X₂ ein Alkyl-, Alkenyl-, Aryl-, Alkylaryl- oder Aralkylrest ist, bevorzugt ein Alkylrest mit 1 bis 20 Kohlenstoffatomen, besonders bevorzugt ein Alkylrest mit 1 bis 8 Kohlenstoffatomen ist, insbesondere bevorzugt eine Methyl-, Ethyl-, n-Propyl-, Isopropyl-, Butyl-, Isobutyl- oder tert.-Butylgruppe ist,
m gleich 0, 1, 2 oder 3, bevorzugt 2 oder 3 ist,
o gleich 0 oder 1 ist,
A₁ und A₂ unabhängig voneinander Wasserstoff oder ein organischer Rest sind, mit der Maßgabe, dass nicht beide Reste A₁ und A₂ gleichzeitig für Wasserstoff stehen können, bevorzugt Wasserstoff, ein Alkyl-, Cycloalkyl-, Alkenyl-, Aryl-, Alkylaryl- oder Aralkylrest sind, der seinerseits substituiert sein kann, besonders bevorzugt Wasserstoff oder ein Phenyl-, Cyclohexyl- oder ein Alkylrest mit 1 bis 20 C-Atomen sind,
B₁ und B₂ unabhängig voneinander divalente Kohlenwasserstoffreste mit 1 bis 18 C-Atomen, bevorzugt mit 1 bis 6 C-Atomen, besonders bevorzugt ein -CH₂-, -CH₂-CH₂- oder -CH₂-CH₂-CH₂-Reste sind,
A₃ Wasserstoff oder ein substituierter oder unsubstituierter Rest ausgewählt aus Alkyl-, Cycloalkyl-, Alkenyl-, Aryl-, Alkylaryl- oder Aralkylrest, ist, bevorzugt Wasserstoff ist.

8. Härtbare Zusammensetzung nach einem der Ansprüche 1 bis 7 **dadurch gekennzeichnet, dass** es sich bei der Verbindung der Komponente b) um Präpolymere mit Alkoxysilylgruppen der Formel (5) 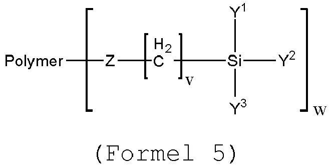 wobei
Y¹, Y² und Y³ unabhängig voneinander Alkyl- oder Alkoxyreste mit 1-8 C-Atomen sind,
Z einen divalenten Carboxy-, Carbamat-, Amid-, Carbonat-, Ureido- oder Sulfonatgruppe enthaltenden Rest darstellt oder ein Sauerstoffatom bedeutet,
w eine ganze Zahl von 1 bis 8 ist, wobei die jeweiligen Einheiten mit dem Index w jeweils w-fach unabhängig voneinander kovalent an das Polymer gebunden sind und
v eine ganze Zahl von 1 bis 20, bevorzugt 1 bis 15, besonders bevorzugt 1 bis 5 und insbesondere bevorzugt, 1, 2 oder 3 ist und
Polymerein Polymer ausgewählt aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Polybutadien, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Siliconharzen, Polyethern, Polyetherestern, Polyethercarbonaten und Mischungen daraus ist,
handelt.

9. Härtbare Zusammensetzung nach einem der Ansprüche 1 bis 8 **dadurch gekennzeichnet, dass** es sich bei dem Präpolymer der Komponente b) mindestens um einen Polyether handelt, der mindestens eine Silylgruppe und bevorzugt mindestens eine OH Gruppe trägt.

10. Härtbare Zusammensetzung nach einem der Ansprüche 1 bis 9 **dadurch gekennzeichnet, dass** der Polyether der Komponente b) an mindestens einem Kettenende mindestens eine OH-Gruppe trägt.

11. Verwendung von Imingruppen aufweisenden Silan-Verbindungen als Haftvermittler in härtbaren Zusammensetzungen nach einem der Ansprüche 1 bis 10.

12. Verwendung von härtbaren Zusammensetzungen nach einem der Ansprüche 1 bis 10 enthaltend mindestens eine Imingruppen aufweisende Silan-Verbindung und mindestens ein Präpolymer enthaltend mindestens eine Silylgruppe als Kleb- und Dichtstoffe, zur Oberflächenbeschichtung und Oberflächenmodifizierung, als reaktive Vernetzer, Primer sowie Bindemittel für Metalle, Glas und Glasfasern/Glasgewebe, Holz und silikatische Materialien.

## Claims

1. Curable composition comprising
a. at least one silane compound having imine groups
b. at least one prepolymer comprising at least one silyl group,
wherein the compound of component b) takes the form of at least one silyl polyether of the formula (6) 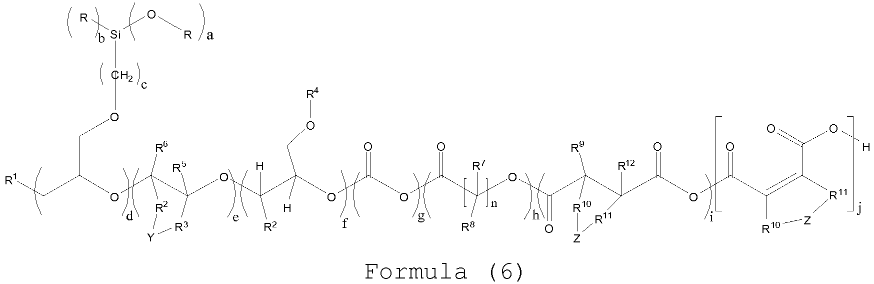 where
a is an integer from 1 to 3, preferably 3,
b is an integer from 0 to 2, preferably 0 to 1, particularly preferably 0, and the sum of a and b is equal to 3,
c is an integer from 0 to 22, preferably from 0 to 12, particularly preferably from 0 to 8, especially preferably from 0 to 4 and in particular is equal to 1 or 3,
d is an integer from 1 to 1000, preferably 1 to 100, particularly preferably 4 to 20 and especially preferably 5 to 10 and in particular is greater than 4 to 10,
e is an integer from 0 to 10 000, preferably 1 to 2000, particularly preferably 5 to 1000 and in particular is 10 to 500,
f is an integer from 0 to 1000, preferably greater than 0 to 100, particularly preferably 1 to 50 and in particular is 0 to 30,
g is an integer from 0 to 1000, preferably greater than 0 to 200, particularly preferably 1 to 100 and in particular is 0 to 70,
h, i and j are integers from 0 to 500, preferably 0 to 300, particularly preferably 0 to 200 and in particular is 0 to 100,
n is an integer between 2 and 8 and with the proviso that the fragments with the indices d to j are freely permutable with one another, i.e. are exchangeable relative to one another in the sequence within the polyether chain and
R corresponds to one or more identical or different residues selected from linear or branched, saturated, mono- or polyunsaturated hydrocarbon residues or haloalkyl residues each preferably having 1 to 20, particularly 1 to 6 carbon atoms, preferably R is a methyl, ethyl, propyl, isopropyl, n-butyl or secondary butyl group;
R¹ corresponds to a saturated or unsaturated, optionally branched residue, which is preferably attached via an oxygen atom, or is a polyether residue of the type of an alkoxy, arylalkoxy or alkylarylalkoxy group, in which the carbon chain can be interrupted by oxygen atoms, or R¹ is an optionally singly or multiply fused aromatic aryloxy group, wherein the residue R¹ in the silyl polyether preferably has no silicon atom, and also
Y may not be present, or may be a methylene bridge with 1 or 2 methylene units and, if Y is present, the residues R² and R³ are each divalent; if Y is not present, the residues R² and R³ are each monovalent monovalent,
R² and R³ mutually independently correspond to hydrogen or a saturated or optionally mono- or polyunsaturated, also further substituted, with halogen or hydroxyl groups for example, linear or branched monovalent (if Y not present) or divalent (if Y present) hydrocarbon residue, preferably having 1 to 20, more preferably having 1 to 10 carbon atoms and particularly preferably having 1 to 6 carbon atoms; the hydrocarbon residue may be bridged cycloaliphatically via the fragment Y; if Y is present, neither of the residues R² or R³ can be hydrogen, rather both residues R² and R³ are divalent hydrocarbons;
R⁴ corresponds to a linear or branched alkyl residue of 1 to 24 carbon atoms or an aromatic or cycloaliphatic residue which may in turn bear alkyl groups;
R⁵ and R⁶ mutually independently correspond to hydrogen or a saturated or optionally mono- or polyunsaturated, also further substituted, with halogen or hydroxyl groups for example, linear or branched monovalent hydrocarbon residue, preferably having 1 to 20, more preferably having 1 to 10 carbon atoms and particularly preferably having 1 to 6 carbon atoms,
R⁷ and R⁸ are mutually independently either hydrogen, alkyl, alkoxy, aryl or aralkyl groups,
R⁹, R¹⁰, R¹¹ and R¹² are mutually independently either hydrogen, alkyl, alkenyl, alkoxy, aryl or aralkyl groups. The hydrocarbon residue can be bridged cycloaliphatically or aromatically via the fragment Z, where Z may be either a divalent alkylene or alkenylene residue.

2. Curable composition according to Claim 1, **characterized in that** the composition comprises less than 1% by weight, preferably less than 0.1% by weight of water and particularly preferably is free of water.

3. Curable composition according to either of Claims 1 or 2, **characterized in that** the composition further comprises calcium carbonate as component c), preferably in amounts of 1 to 60% by weight, preferably 10 to 50% by weight, particularly preferably 20 to 40% by weight, based on the total weight of the composition.

4. Curable composition according to any of Claims 1 to 3, **characterized in that** the composition further comprises a curing catalyst as component d), preferably a tin catalyst.

5. Curable composition according to any of Claims 1 to 4, **characterized in that** the silane compound having imine groups of component a) is a reaction product of a silane compound having amine groups and a carbonyl compound, preferably a carbonyl compound having a boiling point above 100°C.

6. Curable composition according to any of Claims 1 to 5, **characterized in that** the composition further comprises no water scavengers, in particular, no vinyltrimethoxysilane and vinyltrimethoxysilane.

7. Curable composition according to any of Claims 1 to 6, **characterized in that** the silane compound having imine groups of component a) is an aminosilane according to formula (1) 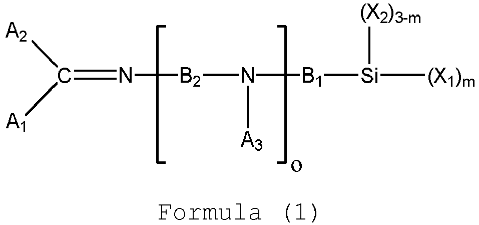 where
X₁ is mutually independently an alkoxy or an aryloxy residue, preferably having 1 to 8 carbon atoms, particularly preferably is a methoxy, ethoxy, isopropoxy, n-propoxy, butoxy or phenoxy residue,
X₂ is an alkyl, alkenyl, aryl, alkylaryl or aralkyl residue, preferably an alkyl residue having 1 to 20 carbon atoms, particularly preferably is an alkyl residue having 1 to 8 carbon atoms, particularly preferably is a methyl, ethyl, n-propyl, isopropyl, butyl, isobutyl or tert-butyl group,
mis 0, 1, 2 or 3, preferably 2 or 3,
ois 0 or 1,
A₁ and A₂ are mutually independently hydrogen or an organic residue, with the proviso that both residues A₁ and A₂ cannot simultaneously be hydrogen, preferably are hydrogen, an alkyl, cycloalkyl, alkenyl, aryl, alkylaryl or aralkyl residue, which may in turn be substituted, particularly preferably are hydrogen or a phenyl, cyclohexyl or an alkyl residue having 1 to 20 carbon atoms,
B₁ and B₂ are mutually independently divalent hydrocarbon residues having 1 to 18 carbon atoms, preferably having 1 to 6 carbon atoms, particularly preferably are a -CH₂-, -CH₂-CH₂- or -CH₂-CH₂-CH₂-residue,
A₃ is hydrogen or a substituted or unsubstituted residue selected from alkyl, cycloalkyl, alkenyl, aryl, alkylaryl or aralkyl residue, preferably is hydrogen.

8. Curable composition according to any of Claims 1 to 7, **characterized in that** the compound of component b) takes the form of prepolymers having alkoxysilyl groups of the formula (5) 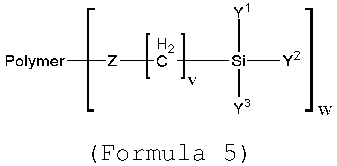 where
Y¹, Y² and Y³ are mutually independently alkyl or alkoxy residues having 1-8 carbon atoms,
Z is a residue comprising a divalent carboxy, carbamate, amide, carbonate, ureido or sulphonate group or is an oxygen atom,
w is an integer from 1 to 8, wherein the respective units with the index w are each mutually independently covalently bonded w-fold to the polymer and
v is an integer from 1 to 20, preferably 1 to 15, particularly preferably 1 to 5 and especially preferably 1, 2 or 3 and
polymer is a polymer selected from a group consisting of alkyd resins, oil-modified alkyd resins, saturated or unsaturated polyesters, natural oils, epoxides, polyamides, polycarbonates, polyethylenes, polypropylenes, polybutylenes, polystyrenes, polybutadiene, ethylene-propylene copolymers, (meth)acrylates, (meth)acrylamides and salts thereof, phenolic resins, polyoxymethylene homopolymers and copolymers, polyurethanes, polysulphones, polysulphide rubbers, nitrocelluloses, vinyl butyrates, vinyl polymers, ethylcelluloses, cellulose acetates and/or butyrates, rayon, shellac, waxes, ethylene copolymers, organic rubbers, polysiloxanes, polyethersiloxanes, silicone resins, polyethers, polyetheresters, polyether carbonates and mixtures thereof.

9. Curable composition according to any of Claims 1 to 8, **characterized in that** the prepolymer of component b) takes the form of at least one polyether bearing at least one silyl group and preferably at least one OH group.

10. Curable composition according to any of Claims 1 to 9, **characterized in that** the polyether of component b) bears at least one OH group on at least one chain end.

11. Use of silane compounds having imine groups as adhesion promoters in curable compositions according to any of Claims 1 to 10.

12. Use of curable compositions according to any of Claims 1 to 10 comprising at least one silane compound having imine groups and at least one prepolymer comprising at least one silyl group as adhesives and sealants, for surface coating and surface modification, as reactive crosslinkers, primers and binders for metals, glass and glass fibres/glass fabrics, wood and silicatic materials.

## Revendications

1. Composition durcissable, contenant :
a. au moins un compose de silane comprenant des groupes imine,
b. au moins un prépolymère contenant au moins un groupe silyle,
le composé du composant b) étant au moins un polyéther silylique de formule (6) 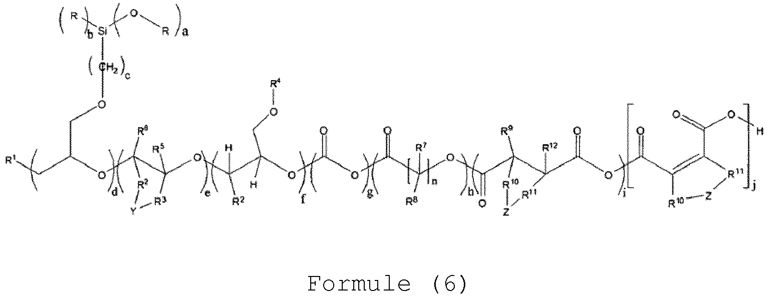 dans laquelle
a est un nombre entier de 1 à 3, de préférence 3,
b est un nombre entier de 0 à 2, de préférence de 0 à 1, de manière particulièrement préférée 0, et la somme de a et b est égale à 3,
c est un nombre entier de 0 à 22, de préférence de 0 à 12, de manière particulièrement préférée de 0 à 8, de manière tout particulièrement préférée de 0 à 4 et vaut notamment 1 ou 3,
d est un nombre entier de 1 à 1 000, de préférence de 1 à 100, de manière particulièrement préférée de 4 à 20 et de manière tout particulièrement préférée de 5 à 10 et notamment de plus de 4 à 10,
e est un nombre entier de 0 à 10 000, de préférence de 1 à 2 000, de manière particulièrement préférée de 5 à 1 000 et notamment de 10 à 500,
f est un nombre entier de 0 à 1 000, de préférence de plus de 0 à 100, de manière particulièrement préférée de 1 à 50 et notamment de 0 à 30,
g est un nombre entier de 0 à 1 000, de préférence de plus de 0 à 200, de manière particulièrement préférée de 1 à 100 et notamment de 0 à 70,
h, i et j sont des nombres entiers de 0 à 500, de préférence de 0 à 300, de manière particulièrement préférée de 0 à 200 et notamment de 0 à 100,
n est un nombre entier compris entre 2 et 8,
à condition que les fragments ayant les indices d à j puissent être permutés librement les uns avec les autres, c.-à-d. puissent être remplacés les uns par les autres dans la séquence dans la chaîne polyéther,
et
R correspond à un ou plusieurs radicaux identiques ou différents, choisis parmi les radicaux hydrocarbonés linéaires ou ramifiés, saturés, mono- ou polyinsaturés, ou les radicaux halogénoalkyle, chacun contenant de préférence 1 à 20, notamment 1 à 6 atomes de carbone, R étant de préférence un groupe méthyle, éthyle, propyle, isopropyle, n-butyle ou sec.-butyle ;
R¹ correspond à un radical saturé ou insaturé, éventuellement ramifié, qui est de préférence relié par un atome d'oxygène, ou représente un radical polyéther du type d'un groupe alcoxy, arylalcoxy ou alkylarylalcoxy, dans lequel la chaîne carbonée peut être interrompue par des atomes d'oxygène, ou R¹ signifie un groupe aryloxy aromatique éventuellement annelé une ou plusieurs fois, le radical R¹ dans le polyéther silylique ne comprenant de préférence pas d'atome de silicium, et
Y peut ne pas être présent, ou être un pont méthylène à 1 ou 2 unités méthylène ; si Y est présent, les radicaux R² et R³ sont chacun bivalents ; si Y n'est pas présent, les radicaux R² et R³ sont chacun monovalents monovalents, R² et R³ correspondent indépendamment l'un de l'autre à l'hydrogène ou un radical hydrocarboné saturé ou éventuellement mono- ou polyinsaturé, également davantage substitué, par exemple avec des groupes halogène ou hydroxyle, linéaire ou ramifié, monovalent (lorsqu'Y n'est pas présent) ou bivalent (lorsqu'Y est présent), de préférence de 1 à 20, de manière davantage préférée de 1 à 10 atomes de carbone et de manière particulièrement préférée de 1 à 6 atomes de carbone ; le radical hydrocarboné pouvant être ponté cycloaliphatiquement par le fragment Y ; si Y est présent, il est possible qu'aucun des radicaux R² et R³ ne représentent l'hydrogène, les deux radicaux R² et R³ représentant alors des hydrocarbures bivalents ;
R⁴ correspond à un radical alkyle linéaire ou ramifié de 1 à 24 atomes de carbone ou un radical aromatique ou cycloaliphatique, qui peut éventuellement porter lui-même des groupes alkyle ;
R⁵ et R⁶ correspondent indépendamment l'un de l'autre à l'hydrogène ou à un radical hydrocarboné saturé ou éventuellement mono- ou polyinsaturé, également davantage substitué, par exemple avec des groupes halogène ou hydroxyle, linéaire ou ramifié, monovalent, de préférence de 1 à 20, de manière davantage préférée de 1 à 10 atomes de carbone et de manière particulièrement préférée de 1 à 6 atomes de carbone,
R⁷ et R⁸ représentent indépendamment l'un de l'autre l'hydrogène, des groupes alkyle, alcoxy, aryle ou aralkyle,
R⁹, R¹⁰, R¹¹ et R¹² représentent indépendamment les uns des autres l'hydrogène, des groupes alkyle, alcényle, alcoxy, aryle ou aralkyle. Le radical hydrocarboné pouvant être ponté cycloaliphatiquement ou aromatiquement par le fragment Z, Z pouvant représenter aussi bien un radical alkylène qu'alcénylène bivalent.

2. Composition durcissable selon la revendication 1, **caractérisée en ce que** la composition contient moins de 1 % en poids, de préférence moins de 0,1 % en poids, d'eau, et est de manière particulièrement préférée exempte d'eau.

3. Composition durcissable selon l'une quelconque des revendications 1 ou 2, **caractérisée en ce que** la composition contient en outre du carbonate de calcium en tant que composant c), de préférence en quantités de 1 à 60 % en poids, de préférence de 10 à 50 % en poids, de manière particulièrement préférée de 20 à 40 % en poids, par rapport au poids total de la composition.

4. Composition durcissable selon l'une quelconque des revendications 1 à 3, **caractérisée en ce que** la composition contient en outre un catalyseur de durcissement, de préférence un catalyseur d'étain, en tant que composant d).

5. Composition durcissable selon l'une quelconque des revendications 1 à 4, **caractérisée en ce que** le composé de silane comprenant des groupes imine du composant a) est un produit de réaction d'un composé de silane comprenant des groupes amine et d'un composé de carbonyle, de préférence d'un composé de carbonyle ayant un point d'ébullition de plus de 100 °C.

6. Composition durcissable selon l'une quelconque des revendications 1 à 5, **caractérisée en ce que** la composition ne contient en outre pas de capteur d'eau, notamment pas de vinyltriméthoxysilane et de vinyltriméthoxysilane.

7. Composition durcissable selon l'une quelconque des revendications 1 à 6, **caractérisée en ce que** le composé de silane comprenant des groupes imine du composant a) est un aminosilane selon la formule (1) 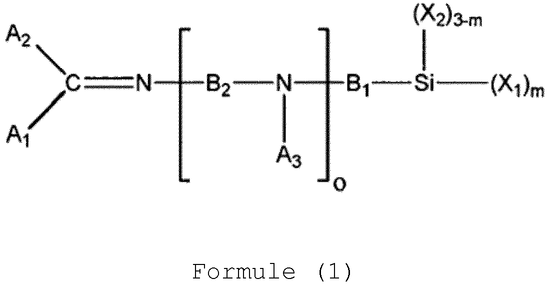 dans laquelle
les X₁ représentent indépendamment les uns des autres un radical alcoxy ou aryloxy, de préférence de 1 à 8 atomes de carbone, de manière particulièrement préférée un radical méthoxy, éthoxy, iso-propoxy, n-propoxy, butoxy ou phénoxy,
X₂ représente un radical alkyle, alcényle, aryle, alkylaryle ou aralkyle, de préférence un radical alkyle de 1 à 20 atome de carbone, de manière particulièrement préférée un radical alkyle de 1 à 8 atomes de carbone, de manière particulièrement préférée un radical méthyle, éthyle, n-propyle, isopropyle, butyle, isobutyle ou tert.-butyle,
m représente 0, 1, 2 ou 3, de préférence 2 ou 3,
o représente 0 ou 1,
A₁ et A₂ représentent indépendamment l'un de l'autre l'hydrogène ou un radical organique, à condition que les deux radicaux A₁ et A₂ ne puissent pas représenter simultanément l'hydrogène, de préférence l'hydrogène, un radical alkyle, cycloalkyle, alcényle, aryle, alkylaryle ou aralkyle, qui peut être substitué de son côté, de manière particulièrement préférée l'hydrogène ou un radical phényle, cyclohexyle ou alkyle de 1 à 20 atomes C,
B₁ et B₂ représentent indépendamment l'un de l'autre des radicaux hydrocarbonés bivalents de 1 à 18 atomes C, de préférence de 1 à 6 atomes C, de manière particulièrement préférée un radical -CH₂-, -CH₂-CH₂- ou -CH₂-CH₂-CH₂-,
A₃ représente l'hydrogène ou un radical substitué ou non substitué choisi parmi un radical alkyle, cycloalkyle, alcényle, aryle, alkylaryle ou aralkyle, de préférence l'hydrogène.

8. Composition durcissable selon l'une quelconque des revendications 1 à 7, **caractérisée en ce que** le composé du composant b) est un prépolymère contenant des groupes alcoxysilyle de formule (5) 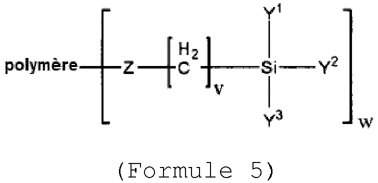 dans laquelle
Y¹, Y² et Y³ représentent indépendamment les uns des autres des radicaux alkyle ou alcoxy de 1 à 8 atomes C,
Z représente un radical bivalent contenant un groupe carboxy, carbamate, amide, carbonate, uréido ou sulfonate, ou signifie un atome d'oxygène,
w représente un nombre entier de 1 à 8, les unités ayant l'indice w étant chacune reliées w fois indépendamment les unes des autres par une liaison covalente au polymère, et
v représente un nombre entier de 1 à 20, de préférence de 1 à 15, de manière particulièrement préférée de 1 à 5 et notamment 1, 2 ou 3, et
« polymère » signifie un polymère choisi dans un groupe constitué par les résines alkyde, les résines alkyde modifiées par des huiles, les polyesters saturés ou insaturés, les huiles naturelles, les époxydes, les polyamides, les polycarbonates, les polyéthylènes, les polypropylènes, les polybutylènes, les polystyrènes, le polybutadiène, les copolymères d'éthylène-propylène, les (méth)acrylates, les (méth)acrylamides et leurs sels, les résines de phénol, les homo- et copolymères de polyoxyméthylène, les polyuréthanes, les polysulfones, les caoutchoucs de polysulfure, les nitrocelluloses, les butyrates de vinyle, les polymères de vinyle, les éthylcelluloses, les acétates et/ou les butyrates de cellulose, la rayonne, la gomme laque, les cires, les copolymères d'éthylène, les caoutchoucs organiques, les polysiloxanes, les polyéther-siloxanes, les résines de silicone, les polyéthers, les polyéther-esters, les polyéther-carbonates et leurs mélanges.

9. Composition durcissable selon l'une quelconque des revendications 1 à 8, **caractérisée en ce que** le prépolymère du composant b) est au moins un polyéther qui porte au moins un groupe silyle et de préférence au moins un groupe OH.

10. Composition durcissable selon l'une quelconque des revendications 1 à 9, **caractérisée en ce que** le polyéther du composant b) porte au moins un groupe OH sur au moins une extrémité de chaîne.

11. Utilisation de composés de silane comprenant des groupes imine en tant que promoteurs d'adhésion dans des compositions durcissables selon l'une quelconque des revendications 1 à 10.

12. Utilisation de compositions durcissables selon l'une quelconque des revendications 1 à 10 contenant au moins un composé de silane comprenant des groupes imine et au moins un prépolymère contenant au moins un groupe silyle en tant que matériaux adhésifs et d'étanchéité, pour le revêtement de surfaces et pour la modification de surfaces, en tant qu'agent de réticulation réactif, primaire, ainsi que liant pour métaux, verre et fibres de verre/tissus de verre, bois et matériaux silicatés.
